# FASCICULE DE BREVET EUROPEEN

(11) **EP 1 247 389 B1**
(45) Date de publication et mention de la délivrance du brevet: **19.11.2003**
(21) Numéro de dépôt: 01989634.9
(22) Date de dépôt: 18.12.2001
(51) Int. Cl.: H04M 3/22

(54) **PROCEDE ET PLATEFORME POUR EVALUATION DE QUALITE VOCALE DE COMMUNICATIONS TELEPHONIQUES**
VERFAHREN UND PLATTFORM ZUR SPRACHQUALITÄTSAUSWERTUNG IN FERNSPRECHKOMMUNIKATIONEN
METHOD AND PLATFORM FOR EVALUATING SPEECH QUALITY IN TELEPHONE COMMUNICATIONS

(30) Priorité: 26.12.2000 FR 0017137
(43) Date de publication de la demande: 09.10.2002
(73) Titulaire: FRANCE TELECOM, 75015 Paris (FR)
(72) Inventeur: BONNIFAIT, Michel, F-22300 Lannion (FR); LE CLEC'H, Michel, F-22700 Perros Guirec (FR)
(74) Mandataire: Jeune, Pascale
(86) Numéro de dépôt international: FR0104028
(87) Numéro de publication internationale: WO02052820

(56) Documents cités:
- EP-A- 0 847 178
- US-A- 5 812 653
- RAMSDEN D B: "IN-SERVICE, NONINTRUSIVE MEASUREMENT ON SPEECH SIGNALS" COUNTDOWN TO THE NEW MILENNIUM. PHOENIX, DEC. 2 - 5, 1991, PROCEEDINGS OF THE GLOBAL TELECOMMUNICATIONS CONFERENCE. (GLOBECOM), NEW YORK, IEEE, US, vol. 3, 2 décembre 1991 (1991-12-02), pages 1761-1764, XP000313702 PHOENIX ISBN: 0-87942-697-7
- SOUTH C R: "IN-SERVICE, NON-INTRUSIVE ASSESSMENT OF TELEPHONY CHANNELS - AN INTRODUCTION" BT TECHNOLOGY JOURNAL, LONDON, GB, vol. 10, no. 2, 1 avril 1992 (1992-04-01), pages 13-17, XP000560047 ISSN: 0265-0193
- NOBUHIKO KITAWAKI: "RESEARCH OF OBJECTIVE SPEECH QUALITY ASSESSMENT" NTT REVIEW, TELECOMMUNICATIONS ASSOCIATION, TOKYO, JP, vol. 3, no. 5, 1 septembre 1991 (1991-09-01), pages 65-70, XP000267069

## Description

La présente invention se rapporte à un procédé de mesure et à une plateforme de collecte de données se rapportant à la qualité de communications vocales transmises par un réseau de télécommunications.

L'invention trouve une application très avantageuse en ce qu'elle permet d'améliorer la fiabilité de l'évaluation subjective de la qualité vocale de communications téléphoniques supportées par des réseaux mobiles. Cette évaluation subjective conduit souvent à juger que la qualité vocale de communications téléphoniques supportées par des réseaux mobiles est inférieure à la qualité vocale de communications téléphoniques supportées par des réseaux fixes. Or, la qualité vocale de communications téléphoniques est un élément évolutif. D'une part, la qualité vocale des communications mobiles devrait évoluer dans les prochaines années pour atteindre le niveau de qualité vocale offert actuellement par les réseaux fixes. D'autre part, le transport de la voix au moyen de techniques de commutation par paquets, en particulier par les techniques dites IP, pourra se traduire par une dégradation de la qualité vocale des réseaux fixes. Cette dégradation pourrait intervenir en particulier lors de la phase de déploiement à grande échelle de ce type de mode de transfert. Ce caractère évolutif de la qualité vocale des communications nécessite des méthodes d'évaluation de cette qualité vocale. Cette évaluation doit être fiable pour que les moyens définis à partir de cette évaluation, en particulier les dispositifs de correction des signaux vocaux tels des dispositifs d'annulation d'échos, soient les mieux adaptés.

Actuellement, les méthodes d'évaluation de qualité vocale sont de deux types.

Un premier type regroupe les méthodes de mesure objectives. Ces méthodes utilisent des signaux de test reproduisant des signaux proches de la parole humaine. L'évaluation de la qualité est effectuée par une analyse des caractéristiques physiques des signaux reçus après transmission par un réseau de télécommunications. Cette analyse peut être temporelle, fréquentielle ou elle peut porter sur la puissance des signaux reçus. Un inconvénient de ces méthodes est l'utilisation de signaux synthétiques. Le document Ramsden D B : "In-Service, nonintrusive measurement on speech signals countdown to the new millenium. Phoenix, dec.2-5, 1991, proceedings of the global télécommunications conférence. (Globecom), New York, IEEE, US, vol.3, 2 décembre 1991, pages 1761-1764, XP000313702 Phoenix ISBN:0-87942-697-7 se rapporte à ce type de méthode. Il en est de même pour le document South C R : "In-service, non-intrusive assessment of telephony channels-An introduction" BT technology journal, London, GB, vol.10, no.2, 1 avril 1992, pages 13-17, XP000560047 ISSN:0265-0193 et pour le document Nobuhiko Kitawaki : "Research of objective speech quality assessment" NTT review, télécommunications association, Tokyo, JP, vol.3, no.5, 1 septembre 1991, pages 65-70, XP000267069.

Un second type regroupe les méthodes de mesure subjectives. Parmi ces méthodes, une première catégorie de méthodes consiste à faire évaluer la qualité des signaux par des expérimentateurs passifs qui écoutent les signaux reçus. Cette écoute est dite formelle. Une seconde catégorie de méthodes fait appel à des expérimentateurs actifs. Ces expérimentateurs actifs établissent une conversation lors de véritables communications et fournissent leur point de vue sur la perception qu'ils ont du niveau de qualité des signaux lors de leur conversation. Bien que subjectives, ces méthodes sont particulièrement utiles en ce qui concerne le domaine des signaux vocaux car l'oreille constitue un bon instrument de mesure de ces signaux.

Toutefois, pour obtenir une évaluation de la qualité vocale proche de la valeur estimée vraie de cette qualité vocale, les méthodes de mesure subjectives nécessitent un nombre important d'expérimentateurs. En effet, lorsque ce nombre est peu important, la justesse de l'évaluation devient fortement dépendante de la qualité de notation de chaque expérimentateur, ainsi que des conditions d'environnement du test.

Aussi, le problème technique à résoudre par l'objet de la présente invention est de proposer un procédé de mesure subjective, consistant à établir un plan de test déterminant des conditions nominales d'expérimentation et des niveaux nominaux de qualité pour le déroulement de tests et à collecter, au cours de ces tests, des données se rapportant à la qualité de communications vocales transmises par un réseau de télécommunications, qui permette d'effectuer des tests d'évaluation avec un nombre restreint d'expérimentateurs tout en fiabilisant les données.

Une solution au problème technique posé consiste, selon la présente invention, en ce que ledit procédé de mesure subjective comprend les étapes qui consistent :
- à établir une première connexion, respectivement une seconde connexion, entre un premier expérimentateur, respectivement un deuxième expérimentateur, et une plateforme,
- à abouter la première connexion avec la seconde connexion au moyen de la plateforme pour établir une communication entre les deux expérimentateurs et leur permettre de converser, la plateforme étant en coupure dans la communication pour acquérir des données sur la communication et des données sur les conditions courantes d'expérimentation,
- à collecter le point de vue des expérimentateurs sur la perception qu'ils ont du niveau de qualité constaté pendant leur conversation,
- à évaluer par la plateforme, la cohérence entre les conditions nominales et les conditions courantes d'expérimentation et, entre le point de vue des expérimentateurs et le niveau nominal de qualité associé au test courant,
- à déterminer le déroulement du test courant en fonction du plan de test et du résultat de l'évaluation.

L'invention a, en outre, pour objet une plateforme de collecte de données pour la mise en oeuvre du procédé qui comprend :
- un moyen de calcul sur lequel est installé un logiciel de gestion de la plateforme,
- un moyen d'accès au réseau de télécommunications en liaison avec le moyen de calcul et comprenant :
   - au moins une interface au réseau de télécommunications,
   - une interface directe à un moyen de traitement du signal,
   - un module logiciel de gestion des appels entrants et sortants,
- un moyen de traitement du signal en liaison avec le moyen de calcul et comprenant :
   - une interface directe au moyen d'accès au réseau de télécommunications, un module logiciel de mesure des paramètres vocaux.

Le moyen de calcul et le moyen de traitement de signal peuvent être regroupés dans un même moyen équipé d'un organe de calcul assez puissant pour assurer simultanément des opérations de gestion de la plateforme et des opérations de traitement de signal.

Ainsi, le procédé selon l'invention, qui concerne la mesure subjective de la qualité des communications vocales, permet de collecter des données se rapportant à la qualité de communications vocales. Pour collecter ces données, le procédé établit une communication entre deux expérimentateurs en aboutant au moyen de la plateforme deux connexions, chaque connexion établissant un lien téléphonique entre un expérimentateur et la plateforme. Les données collectées regroupent des données sur la communication établie entre les deux expérimentateurs et des données sur les conditions courantes d'expérimentation. Les conditions nominales sont les conditions déterminées par le plan de test dont chaque expérimentateur et la plateforme ont connaissance. Les conditions courantes sont les conditions dans lesquelles se déroule réellement le test. La plateforme évalue la cohérence entre les conditions nominales et les conditions courantes d'expérimentation et, entre le point de vue des expérimentateurs sur la perception qu'ils ont du niveau de qualité constaté pendant leur conversation et le niveau nominal de qualité associé au test courant. Si cette évaluation donne une indication d'incohérence, le procédé peut modifier le déroulement du plan de test.

Le procédé de mesure subjective conforme à l'invention résout le problème posé. En effet, les informations saisies sont comparées avec les conditions nominales du test et le procédé évalue la cohérence du résultat de la comparaison. Cette comparaison s'effectuant simultanément au déroulement du test, elle permet à la plateforme de re-formuler une question pour validation par un expérimentateur. Ainsi, si une incohérence est détectée, les informations collectées correspondantes sont confirmées ou infirmées par un expérimentateur. Par conséquent, l'augmentation de la fiabilité des données intervient dès leur saisie par un expérimentateur et elle n'est pas seulement liée au nombre d'expérimentateurs.

Le procédé selon l'invention peut se dérouler selon plusieurs modes particuliers de réalisation.

Selon un premier mode, l'établissement de la première connexion se fait sur l'initiative du premier expérimentateur qui compose un numéro d'appel attribué à la plateforme. Ainsi, les contraintes de mise en oeuvre du procédé et de la plateforme sont plus souples que celles des techniques connues.

Selon un second mode, l'établissement de la deuxième connexion se fait à l'initiative de la plateforme qui invite le premier expérimentateur à composer un numéro d'appel attribué au deuxième expérimentateur. Ainsi, la plateforme garde la maîtrise de l'établissement de la deuxième connexion.

Selon un troisième mode, le procédé détermine en outre des consignes d'exécution des tests basées sur un tableau de correspondance entre différentes réponses possibles à une question posée par la plateforme et les touches d'un clavier téléphonique. Ainsi, ceci permet d'avoir un cadre précis qui limite les réponses possibles et, par voie de conséquence qui limite les erreurs de saisies.

Selon un quatrième mode, le procédé détermine en outre des consignes d'exécution des tests basées sur un tableau de correspondance entre différentes réponses possibles à une question posée par la plateforme et des mots clés à prononcer par un expérimentateur. Ce mode permet de faciliter la mise en oeuvre du procédé avec des terminaux mobiles. Il est en effet difficile de sélectionner une touche d'un terminal mobile tout en ayant l'oreille contre l'écouteur.

Selon un cinquième mode, la plateforme aboute les connexions par l'intermédiaire d'un équipement externe à évaluer. Selon une première variante à ce mode, parmi les données constituant la communication, les données en provenance de chacun des expérimentateurs sont modifiéess par l'équipement déterminé. Selon une seconde variante à ce mode, parmi les données constituant la communication, seuls les données en provenance d'un des expérimentateurs sont modifiéess par l'équipement déterminé. Ce mode permet avantageusement d'analyser l'impact d'un équipement externe sur une communication. En particulier, lorsque cet équipement externe est un dispositif d'annulation d'écho. Les données comprennent en particulier les signaux de parole.

Selon un sixième mode, les acquisitions des conditions d'expérimentation courantes comprennent des réponses des expérimentateurs aux questions de la plateforme concernant des conditions opératoires, des mesures de paramètres vocaux et, des mesures de paramètres d'environnement effectuées de manière non intrusive par la plateforme. Ainsi, le procédé peut effectuer une comparaison avec des informations émanant de sources différentes et consolider l'analyse de cohérence.

Selon un septième mode, la plateforme met fin à la communication en supprimant l'aboutement des deux connexions. Selon une variante à ce mode, après avoir mis fin à la communication, la plateforme maintient chacune des deux connexions pendant une durée déterminée pour saisir des réponses de chaque expérimentateur à des questions posées par la plateforme. Ainsi, la plateforme a une maîtrise de la durée de communication et gère de manière indépendante chacune des connexions avec chacun des expérimentateurs.

Selon un huitième mode, le procédé comprend en outre l'étape qui consiste :
- à déterminer une liste d'expérimentateurs autorisés à appeler la plateforme en leur attribuant un numéro d'authentification. Cette liste permet d'authentifier les personnes autorisées.

Selon un neuvième mode, le procédé comprend en outre l'étape qui consiste :
- à contrôler, par la plateforme, l'autorisation donnée à l'expérimentateur d'appeler la plateforme, en vérifiant le numéro d'authentification fourni par l'expérimentateur suite à une requête de la plateforme. Cette vérification permet de filtrer tout usage frauduleux de la plateforme par des personnes non autorisées.

Selon un dixième mode, le procédé comprend en outre l'étape qui consiste :
- à gérer une base de numéros d'authentification ayant une durée de validité pour un test donné. Selon une variante à ce mode, le procédé comprend en outre l'étape qui consiste :

- à l'issue d'une série de tests, à mettre à zéro la durée de validité des numéros d'authentification des deux expérimentateurs. Ainsi, l'autorisation d'accès à la plateforme est limitée dans le temps. La personne autorisée à un instant t, ne l'est plus après une durée donnée. Ceci permet d'éviter avantageusement toute utilisation frauduleuse que pourrait effectuer cette personne, passée la durée donnée.

Selon un onzième mode, le procédé consiste, à l'issu d'un test, à répéter en séquence un nombre de fois déterminé les étapes qui consistent :
- à communiquer aux expérimentateurs des informations sur le test suivant,
- à couper les connexions avec les expérimentateurs,
- à enchaîner les étapes dudit procédé de mesure subjective selon l'un des modes précédents, étapes pour lesquelles le test courant est différent de chaque test déjà déroulé par le couple formé des deux expérimentateurs. Selon une première variante à ce mode, l'ordre entre les différents tests est prédéterminé. Selon une seconde variante à ce mode, le procédé consiste à dérouler en parallèle, avec des couples d'expérimentateurs différents, un procédé selon ce onzième mode. Et, chaque couple d'expérimentateurs déroule les tests dans un ordre prédéterminé de façon à minimiser le biais statistique sur les réponses des expérimentateurs. Ainsi, selon le onzième mode, le procédé permet de dérouler une série de n tests qui sont déterminés par le plan de test. Pour minimiser le biais statistique, le nombre de couples d'expérimentateurs est choisi égal à n selon le principe du "carré gréco-latin".

Selon un mode de réalisation particulier, une plateforme selon l'invention est telle que :
- le moyen de calcul est un ordinateur personnel équipé d'un bus interne,
- le moyen d'accès au réseau de télécommunications est une carte d'accès équipée :
   - d'une interface au bus interne de l'ordinateur personnel,
   - d'au moins une interface de type numérique au réseau de télécommunications,
   - d'une interface directe à un moyen de traitement du signal,
   - d'un logiciel d'accès au réseau de télécommunications,
- le moyen de traitement du signal est une carte en liaison avec l'ordinateur au moyen du bus inteme.

D'autres caractéristiques et avantages de l'invention apparaîtront lors de la description qui suit faite en regard de figures annexées données à titre d'exemples non limitatifs.
La figure 1 est un organigramme d'un procédé selon l'invention.
La figure 2 est un schéma d'une plateforme selon l'invention.
La figure 3 est un schéma illustrant une mise en oeuvre d'une plateforme et d'un procédé selon l'invention.

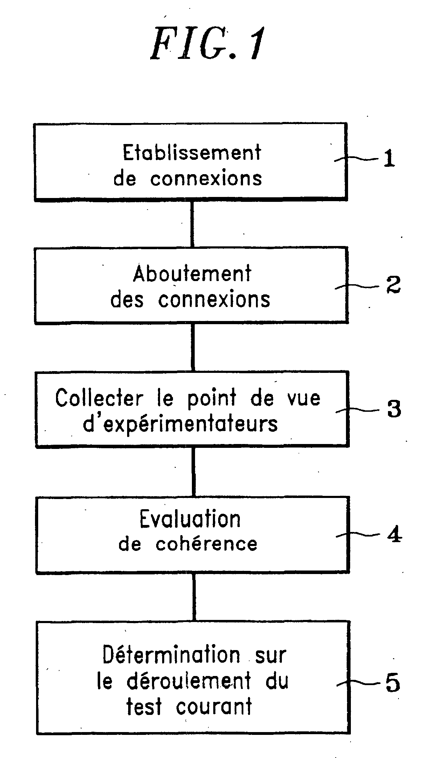

Le procédé selon l'invention se déroule suivant plusieurs étapes décrites ci-après et illustrées par la figure 1.

Préalablement au déroulement des étapes, le procédé établit un plan de test déterminant les conditions nominales d'expérimentation et les niveaux nominaux de qualité pour le déroulement des différents tests.

Dans une première étape 1, le procédé consiste à établir une première connexion, respectivement une seconde connexion, entre un premier expérimentateur, respectivement un deuxième expérimentateur, et une plateforme. Chaque expérimentateur ayant à sa disposition un terminal téléphonique.

Dans une deuxième étape 2, le procédé consiste à abouter la première connexion avec la seconde connexion au moyen de la plateforme pour établir une communication entre les deux expérimentateurs, la plateforme étant en coupure dans la communication pour acquérir des données sur la communication.

Dans une troisième étape 3, le procédé consiste à collecter le point de vue des expérimentateurs sur la perception qu'ils ont du niveau de qualité constaté pendant leur conversation.

Dans une quatrième étape 4, le procédé consiste à évaluer, par la plateforme, la cohérence d'une part entre les données collectées et, d'autre part entre les conditions nominales d'expérimentation et le niveau nominal de qualité associé au test courant. Par exemple, lorsqu'un test met en jeu un téléphone mobile et que l'expérimentateur qui le détient doit se situer dans une rue calme, le niveau nominal de qualité est celui attribué à une ambiance calme.

Dans une cinquième étape 5, le procédé consiste à déterminer le déroulement du test en fonction du plan de test et du résultat de l'évaluation.

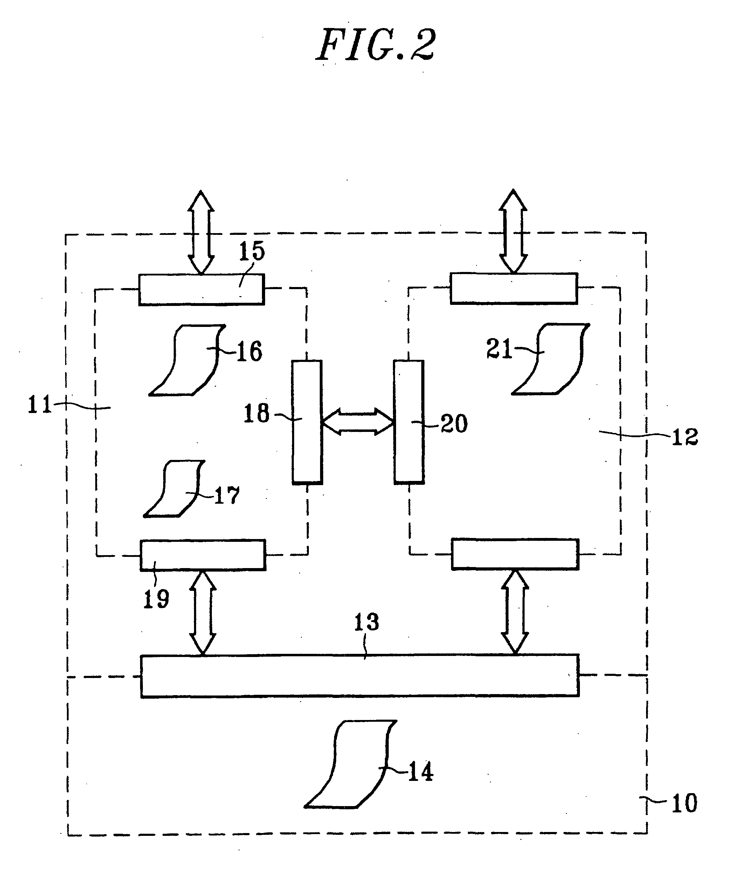

Une réalisation particulière d'une plateforme selon l'invention est décrite en regard de la figure 2.

La plateforme comprend un moyen 10 de calcul, un moyen 11 d'accès au réseau de télécommunications, en liaison avec le moyen de calcul et, un moyen 12 de traitement du signal en liaison avec le moyen de calcul si ces deux moyens ne sont pas confondus.

Le moyen 10 de calcul consiste typiquement en un ordinateur personnel équipé d'un bus 13 interne et sur lequel est installé un logiciel 14 de gestion de la plateforme. Le moyen 10 de calcul peut être un moyen équivalent possédant des ressources de calcul, de mémoire, d'interfaces externes et internes tel un serveur.

Le moyen 11 d'accès au réseau de télécommunications comprend :
- au moins une interface 15 au réseau,
- un module 16 logiciel de gestion des appels entrants et sortants,
- un module 17 logiciel de gestion des codes DTMF émis par un terminal ou un module de reconnaissance vocale des mots clés émis par les expérimentateurs,
- une interface 18 directe avec le moyen de traitement du signal.

Le moyen 11 d'accès au réseau consiste typiquement en une carte électronique comprenant en outre :
- une interface 19 au bus interne de l'ordinateur personnel.

L'interface 15 au réseau, du moyen d'accès, est typiquement de type numérique, par exemple de type RNIS (abréviation des termes Réseau Numérique à Intégration de Service) ou de type haut débit. Une telle interface a pour avantage de ne pas, ou peu, introduire de dégradations sur les signaux. Par conséquent, l'influence de cette interface peut être négligée. La carte 11 électronique d'accès au réseau de télécommunications est en liaison avec l'ordinateur personnel 10 au moyen du bus 13 interne.

Le moyen 12 traitement du signal est typiquement une carte qui comprend :
- une interface 20 directe au moyen d'accès au réseau,
- un module 21 logiciel de mesure des paramètres vocaux.

La carte de traitement du signal est équipée d'un processeur et de mémoires permettant de faire fonctionner les algorithmes de traitement du signal. Dans une mise en oeuvre particulière le processeur est un DSP, abréviation des termes Digital Signal Processor ou un processeur RISC.

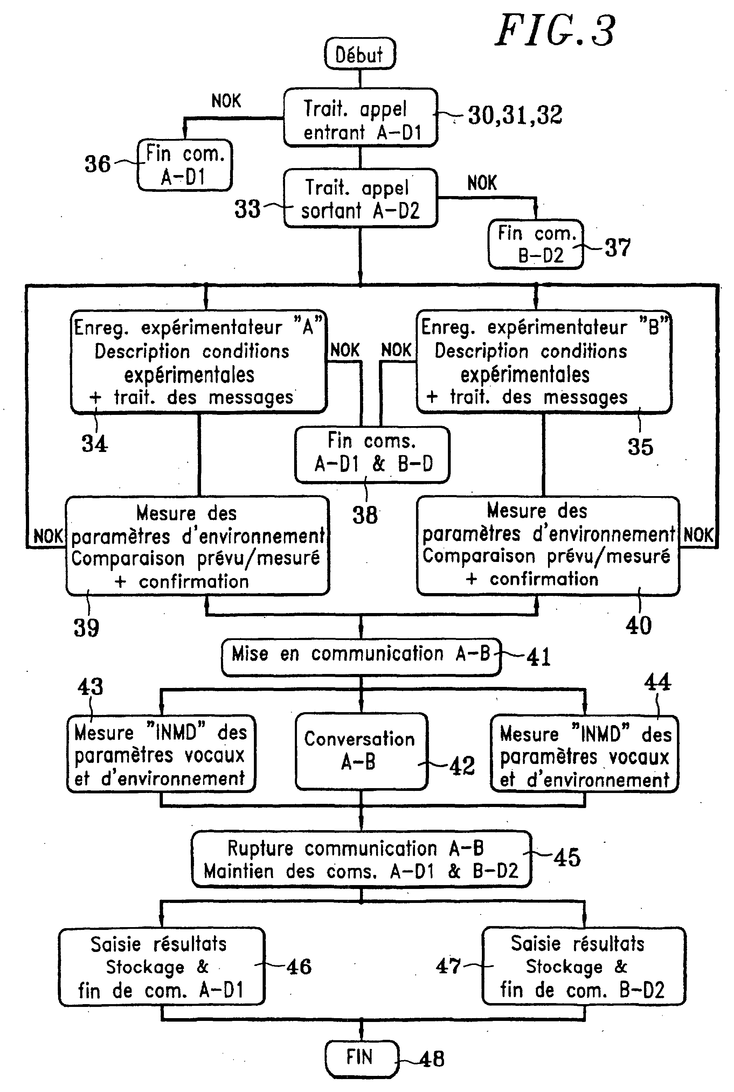

Une mise en oeuvre particulière du procédé de mesure et de la plateforme de collecte est décrite en regard de la figure 3.

Un premier expérimentateur compose 30 le numéro d'appel attribué à la plateforme. Le procédé établit 31 une première connexion entre ce premier expérimentateur et la plateforme dès que la plateforme répond. Pour éviter toute utilisation détournée de la plateforme, en particulier une utilisation par l'expérimentateur à des fins privées, un procédé d'authentification 32, associé éventuellement à un procédé d'identification, est mis en oeuvre. Selon cette mise en oeuvre, la plateforme demande à l'expérimentateur de fournir un numéro d'authentification, et éventuellement son nom pour identification. Ce numéro d'authentification est transmis à l'expérimentateur, par exemple par la poste et, il peut avoir une durée de validité limitée fixée par la plateforme.

Après authentification de l'expérimentateur, la plateforme invite l'expérimentateur a composèrle numéro du deuxième expérimentateur. La plateforme établit 33, à partir de ce numéro, une deuxième connexion avec le deuxième expérimentateur. Ainsi, la plateforme entretient deux connexions, une première connexion avec le premier expérimentateur et une deuxième connexion avec le deuxième expérimentateur.

Selon une variante, la plateforme peut établir plus de deux connexions. Selon un plan de test particulier, il peut être nécessaire d'établir une communication avec plus de deux expérimentateurs, par exemple trois expérimentateurs. Dans ces conditions, la plateforme établit autant de connexions que d'expérimentateurs devant évaluer une même communication.

Pendant l'entretien d'une connexion, la plateforme déroule une phase préliminaire du test. Pendant cette phase, la plateforme émet 34, 35 des messages sonores à destination de chacun des expérimentateurs. Chaque expérimentateur répond 34, 35, soit en sélectionnant une touche du clavier, soit en prononçant un mot clé ou plusieurs mots clés. La possibilité de répondre par des mots clés est donnée par un mode de réalisation particulier de la plateforme qui inclut un dispositif de reconnaissance vocale. Pendant cette phase, la plateforme définit les conditions expérimentales et invite chaque expérimentateur à confirmer sa situation par rapport à ces conditions. La plateforme peut renvoyer pour chaque condition expérimentale à un passage déterminé de la version papier des consignes d'exécution des tests fournie au préalable à chaque expérimentateur. Pour limiter les problèmes de saisies des réponses, la confirmation, ou l'infirmation, peut être associée à une touche spéciale du clavier. Selon un exemple de mise en oeuvre, la confirmation se fait en sélectionnant la touche * et l'infirmation en sélectionnant la touche # du clavier. Pendant la phase préliminaire, la plateforme analyse les réponses données par chaque expérimentateur. Cette analyse permet de détecter des erreurs de saisie, des tentatives d'accès par des personnes non autorisées et des situations non adéquates avec le déroulement du plan de test. Dans les cas de détection d'erreurs de saisie, la plateforme peut réitérer une question et inviter l'expérimentateur à saisir de nouveau une réponse. En cas d'erreurs réitérées de saisie ou de numéro d'authentification non valide, la plateforme peut rompre 36, 37, 38 les connexions et mettre fin au déroulement du test.

Pendant cette phase préliminaire, la plateforme peut enregistrer 39, 40 des informations relatives à l'environnement. Ces informations sont saisies par les expérimentateurs ou ces informations résultent de mesures effectuées par la plateforme en l'absence de signal de parole. Ces informations se rapportent par exemple au niveau de signal radio, dans le cas d'une utilisation d'un terminal mobile, au niveau de bruit et à ses variations. Ainsi, en l'absence de signal de parole, la plateforme recueille le fond sonore capté par le terminal et effectue des mesures du niveau de bruit pour évaluer les conditions réelles d'environnement. Dans le cas où ces conditions différent de ce qui est attendu pour le test considéré, l'expérimentateur est informé par un message sonore puis est invité soit à rectifier la situation (en cas d'erreurs sur les conditions de test), soit à les confirmer malgré tout. Un tel cas se présente par exemple lorsque l'expérimentateur est équipé d'un terminal mobile, qu'il doit se placer dans une rue bruyante et que le niveau de bruit réel est nettement inférieur au niveau nominal attendu. Dans ce cas, le test peut être poursuivi et l'analyse ultérieure des informations saisies prendra en compte le niveau réel de bruit enregistré. De manière complémentaire, la plateforme peut effectuer des mesures d'affaiblissement et de retard d'écho en analysant l'écho éventuel de ses propres messages émis ou l'écho des signaux vocaux émanant des expérimentateurs.

A la fin de la phase préliminaire, la plateforme aboute 41 les deux connexions pour établir une communication entre les expérimentateurs. Cet aboutement s'effectue suivant deux modes en fonction de l'objectif du test. Lorsque le test se rapporte à une évaluation qui porte sur l'intégralité des éléments du réseau de télécommunications ayant servi à établir la communication entre les expérimentateurs, le mode est dit transparent. Lorsque le test se rapporte à une évaluation qui porte essentiellement sur un dispositif externe connecté à la plateforme, le mode est dit non transparent.

Pendant la phase où la communication est établie, la conversation 42 entre les expérimentateurs est sous le contrôle de la plateforme. Ce contrôle permet en particulier de limiter la durée des conversations de test. Pendant cette phase, la plateforme mesure 43, 44 des paramètres vocaux, tels le niveau du signal de parole, le niveau d'écho, le retard d'écho, l'occurrence de saturations du signal,... ainsi que des paramètres d'environnement sonore. Ces mesures sont effectuées sans perturber la communication, par exemple selon une technique connue sous les sigles INMD, abréviation des termes anglo-saxons In service Non intrusive Measurement Device. Les mesures sont stockées par la plateforme.

A la fin de cette phase, dont la durée maximum est contrôlée par la plateforme, la plateforme coupe 45 la communication en interrompant l'aboutement des connexions tout en maintenant chacune de ces connexions. Durant la phase suivante 46, 47, la plateforme émet des questions à destination de chaque expérimentateur et, les invite à y répondre par la sélection d'une touche du clavier ou par l'émission d'un, ou plusieurs, mot clé. La plateforme peut effectuer une analyse de la cohérence des réponses de chaque expérimentateur et, des réponses des expérimentateurs entre eux. Toujours pour minimiser les erreurs de saisie, la plateforme peut effectuer une détection de réponses non-valides. La détection peut consister en une comparaison avec une gamme de réponses attendues, une re-formulation de la réponse donnée et une invitation à confirmer ou à infirmer. Après la confirmation, ou infirmation, de la dernière question la séquence du test en cours est terminée. La plateforme peut, soit indiquer la fin de l'évaluation s'il n'y a pas d'autre test à enchaîner, soit énoncer les conditions expérimentales du test suivant et inviter les expérimentateurs à appeler la plateforme ultérieurement lorsqu'ils se seront placés dans les conditions attendues.

Après émission de ce dernier message, la plateforme relâche 48 les connexions et marque ainsi la fin du test en cours. Le relâchement des connexions déclenche l'enregistrement de toutes les informations collectées dans une base de données intégrée à la plateforme.

## Revendications

1. Procédé de mesure subjective, consistant à établir un plan de test déterminant des conditions nominales d'expérimentation et des niveaux nominaux de qualité pour le déroulement de tests et à collecter, au cours de ces tests, des données se rapportant à la qualité de communications vocales transmises par un réseau de télécommunications, **caractérisé en ce qu'**il comprend les étapes qui consistent :
- à établir (1) une première connexion, respectivement une seconde connexion, entre un premier expérimentateur, respectivement un deuxième expérimentateur, et une plateforme,
- à abouter (2) la première connexion avec la seconde connexion au moyen de la plateforme pour établir une communication entre les deux expérimentateurs et leur permettre de converser, la plateforme étant en coupure dans la communication pour acquérir des données sur la communication et des données sur les conditions courantes d'expérimentation,
- à collecter (3) le point de vue des expérimentateurs sur la perception qu'ils ont du niveau de qualité constaté pendant leur conversation,
- à évaluer (4) par la plateforme, la cohérence entre les conditions nominales et les conditions courantes d'expérimentation et, entre le point de vue des expérimentateurs et le niveau nominal de qualité associé au test courant.
- à déterminer (5) le déroulement du test courant en fonction du plan de test et du résultat de l'évaluation.

2. Procédé de mesure subjective selon la revendication 1, dans lequel l'établissement de la première connexion se fait sur l'initiative du premier expérimentateur qui compose un numéro d'appel attribué à la plateforme.

3. Procédé de mesure subjective selon la revendication 2, dans lequel l'établissement de la deuxième connexion se fait sur l'initiative de la plateforme qui invite le premier expérimentateur à composer un numéro d'appel attribué au deuxième expérimentateur.

4. Procédé de mesure subjective selon l'une des revendications 1 à 3, qui comprend en outre l'étape qui consiste à déterminer des consignes d'exécution des tests basées sur un tableau de correspondance entre différentes réponses possibles à une question posée par la plateforme et les touches d'un clavier téléphonique.

5. Procédé de mesure subjective selon l'une des revendications 1 à 3, qui comprend en outre l'étape qui consiste à déterminer des consignes d'exécution des tests basées sur un tableau de correspondance entre différentes réponses possibles à une question posée par la plateforme et des mots clés à prononcer par un expérimentateur.

6. Procédé de mesure subjective selon l'une des revendications 1 à 5, dans lequel la plateforme aboute les connexions par l'intermédiaire d'un équipement externe déterminé à évaluer.

7. Procédé de mesure subjective selon la revendication 6, dans lequel, parmi les données constituant la communication, les données en provenance de chacun des expérimentateurs sont modifiées par l'équipement externe déterminé.

8. Procédé de mesure subjective selon la revendication 6, dans lequel, parmi les données constituant la communication, seules les données en provenance d'un des expérimentateurs sont modifiées par l'équipement externe déterminé.

9. Procédé de mesure subjective selon l'une des revendications 1 à 8, dans lequel les acquisitions des conditions d'expérimentation courantes comprennent des réponses des expérimentateurs aux questions posées par la plateforme concernant des conditions opératoires, des mesures de paramètres vocaux et, des mesures de paramètres d'environnement effectuées de manière non intrusive par la plateforme.

10. Procédé de mesure subjective selon l'une des revendications 1 à 9, dans lequel la plateforme met fin à la communication en supprimant l'aboutement des deux connexions.

11. Procédé de mesure subjective selon la revendication 10, dans lequel, après avoir mis fin à la communication, la plateforme maintient chacune des deux connexions pendant une durée déterminée pour saisir des réponses de chaque expérimentateur à des questions posées par la plateforme.

12. Procédé de mesure subjective selon l'une des revendications 1 à 11, qui comprend en outre l'étape qui consiste :
- à déterminer une liste d'expérimentateurs autorisés à appeler la plateforme en leur attribuant un numéro d'authentification.

13. Procédé de mesure subjective selon la revendication 12, qui comprend en outre l'étape qui consiste :
- à contrôler, par la plateforme, l'autorisation donnée à l'expérimentateur d'appeler la plateforme, en vérifiant le numéro d'authentification fourni par l'expérimentateur suite à une requête de la plateforme.

14. Procédé de mesure subjective selon l'une des revendications 12 et 13, qui comprend en outre l'étape qui consiste :
- à gérer une base de numéros d'authentification ayant une durée de validité pour un test donné.

15. Procédé de mesure subjective selon la revendication 14, qui comprend en outre l'étape qui consiste :
- à l'issue d'une série de tests, à mettre à zéro la durée de validité des numéros d'authentification des deux expérimentateurs.

16. Procédé de mesure subjective selon l'une des revendications précédentes qui consiste, à l'issu d'un test, à répéter en séquence un nombre de fois déterminé les étapes qui consistent :
- à communiquer aux expérimentateurs des informations sur le test suivant,
- à couper les connexions avec les expérimentateurs,
- à enchaîner les étapes dudit procédé de mesure subjective selon l'une des revendications précédentes, étapes pour lesquelles le test courant est différent de chaque test déjà déroulé par le couple formé des deux expérimentateurs.

17. Procédé de mesure subjective selon la revendication 16 dans lequel l'ordre entre les différents tests est déterminé pour un couple d'expérimentateurs donné.

18. Procédé de mesure subjective selon l'une des revendications précédentes qui comprend en outre les étapes qui consistent :
- à établir (1) une connexion supplémentaire entre chaque expérimentateur supplémentaire et la plateforme,
- à abouter (2) chaque connexion entre elles au moyen de la plateforme pour établir une communication entre tous les expérimentateurs et leur permettre de converser, la plateforme étant en coupure dans la communication pour acquérir des données sur la communication.

19. Procédé de mesure subjective qui consiste à dérouler en parallèle avec des couples d'expérimentateurs différents un procédé selon la revendication 16, chaque couple d'expérimentateurs déroulant les plans de test dans un ordre déterminé spécifique à chaque couple.

20. Plateforme de mesure subjective comprenant des moyens pour la mise en oeuvre de toutes les étapes d'un procédé selon l'une des revendications précédentes **caractérisée en ce qu'**elle comprend :
- un moyen (10) de calcul sur lequel est installé un logiciel (14) de gestion de la plateforme,
- un moyen (11) d'accès au réseau de télécommunications en liaison avec le moyen (10) de calcul et comprenant :
- au moins une interface (15) au réseau de télécommunications,
- une interface (18) directe à un moyen de traitement du signal,
- un module (16) logiciel de gestion des appels entrants et sortants,
- un moyen (12) de traitement du signal en liaison avec le moyen (10) de calcul et comprenant :
- une interface (20) directe au moyen d'accès au réseau de télécommunications,
- un module (21) logiciel de mesure des paramètres vocaux.

21. Plateforme de collecte de données selon la revendication 20 dans laquelle :
- le moyen (10) de calcul est un ordinateur personnel équipé d'un bus interne (13),
- le moyen (11) d'accès au réseau de télécommunications est une carte d'accès équipée :
- d'une interface (19) au bus interne de l'ordinateur personnel,
- d'au moins une interface (15) de type numérique au réseau de télécommunications,
- d'une interface (18) directe à un moyen de traitement du signal,
- un module (16) logiciel de gestion des appels entrants et sortants,
- le moyen (12) de traitement du signal est une carte équipée d'un processeur et de mémoires pour l'exécution d'algorithmes de traitement du signal, en liaison avec l'ordinateur au moyen du bus interne.

## Patentansprüche

1. Subjektives Messverfahren, bestehend aus der Herstellung eines die nominalen Versuchsbedingungen und die nominalen Qualitätsniveaus für die Abwicklung von Tests bestimmenden Testplans und dem Sammeln der sich auf die Qualität der durch ein Telekommunikationsnetz übertragenen sprachlichen Kommunikation beziehenden Daten während dieser Tests, **dadurch gekennzeichnet, dass** es die Schritte umfasst, die aus Folgendem bestehen:
- Herstellen (1) einer ersten Verbindung bzw. einer zweiten Verbindung zwischen einem ersten Experimentator bzw. einem zweiten Experimentator und einer Plattform,
- Anfügen (2) der ersten Verbindung an die zweite Verbindung mittels der Plattform zwecks Herstellung einer Kommunikation zwischen den beiden Experimentatoren und um ihnen zu erlauben miteinander zu sprechen, wobei die Plattform bei der Kommunikation abgehängt ist, um Daten über die Kommunikation und Daten über die laufenden Versuchsbedingungen zu erwerben,
- Entgegennehmen (3) des Standpunktes der Experimentatoren über den Eindruck, den sie von dem während ihres Gesprächs festgestellten Qualitätsniveau haben,
- Bewertung (4) der Kohärenz zwischen den nominalen Bedingungen und den laufenden Versuchsbedingungen und zwischen dem Standpunkt der Experimentatoren und dem nominalen, dem laufenden Test zugeordneten Qualitätsniveau durch die Plattform,
- Bestimmung (5) des laufenden Testablaufs in Abhängigkeit vom Testplan und vom Ergebnis der Bewertung.

2. Subjektives Messverfahren gemäß Anspruch 1, in dem die Herstellung der ersten Verbindung auf Initiative des ersten Experimentators erfolgt, der eine der Plattform zugeordnete Rufnummer wählt.

3. Subjektives Messverfahren gemäß Anspruch 2, in dem die Herstellung der zweiten Verbindung auf Initiative der Plattform erfolgt, die den ersten Experimentator zum Wählen der dem zweiten Experimentator zugeordneten Rufnummer auffordert.

4. Subjektives Messverfahren gemäß Anspruch 1 bis 3, das darüber hinaus den Schritt umfasst, der in der Bestimmung der auf einer Korrespondenztabelle zwischen den verschiedenen möglichen Antworten auf eine von der Plattform gestellte Frage und den Tasten einer Telefontastatur basierenden Ausführungsanweisungen der Tests besteht.

5. Subjektives Messverfahren gemäß Anspruch 1 bis 3, das darüber hinaus den Schritt umfasst, der in der Bestimmung der auf einer Korrespondenztabelle zwischen den verschiedenen möglichen Antworten auf eine von der Plattform gestellte Frage und den von einem Experimentator auszusprechenden Schlüsselwörtern basierenden Ausführungsanweisungen der Tests besteht.

6. Subjektives Messverfahren gemäß Anspruch 1 bis 5, in dem die Plattform die Verbindungen durch eine externe, zur Bewertung bestimmte Ausrüstung anfügt.

7. Subjektives Messverfahren gemäß Anspruch 6, in dem unter den die Kommunikation bildenden Daten die von jedem der Experimentatoren stammenden Daten durch die bestimmte externe Ausrüstung geändert werden.

8. Subjektives Messverfahren gemäß Anspruch 6, in dem unter den die Kommunikation bildenden Daten nur die von einem der Experimentatoren stammenden Daten durch die bestimmte externe Ausrüstung geändert werden.

9. Subjektives Messverfahren gemäß Anspruch 1 bis 8, in dem die Erwerbe der laufenden Versuchsbedingungen Antworten der Experimentatoren auf die von der Plattform gestellten Fragen bezüglich der Betriebsbedingungen, der Messungen der sprachlichen Parameter und der auf nicht intrusive Weise durch die Plattform durchgeführte Messungen der Umweltparameter umfassen.

10. Subjektives Messverfahren gemäß Anspruch 1 bis 9, in dem die Plattform die Kommunikation durch Abhängen der Anfügung der beiden Verbindungen beendet.

11. Subjektives Messverfahren gemäß Anspruch 10, in dem die Plattform nach Beendigung der Kommunikation jede der beiden Verbindungen für eine bestimmte Dauer aufrecht erhält, um die Antworten jedes Experimentatoren auf die von der Plattform gestellten Fragen zu erfassen.

12. Subjektives Messverfahren gemäß Anspruch 1 bis 11, das darüber hinaus den Schritt umfasst, der aus Folgendem besteht:
- Bestimmung einer Liste zugelassener Experimentatoren zum Anrufen der Plattform, indem ihnen eine Authentifizierungsnummer zugewiesen wird.

13. Subjektives Messverfahren gemäß Anspruch 12, das darüber hinaus den Schritt umfasst, der aus Folgendem besteht:
- Kontrolle der dem Experimentator von der Plattform zum Anrufen der Plattform erteilten Zulassung durch Überprüfung der vom Experimentator im Anschluss an eine Anfrage der Plattform gelieferten Authentifizierungsnummer.

14. Subjektives Messverfahren gemäß Anspruch 12 und 13, das darüber hinaus den Schritt umfasst, der aus Folgendem besteht:
- Verwaltung einer Authentifizierungsnummernbank mit einer Gültigkeitsdauer für einen bestimmten Test.

15. Subjektives Messverfahren gemäß Anspruch 14, das darüber hinaus den Schritt umfasst, der aus Folgendem besteht:
- Die Gültigkeitsdauer der Authentifizierungsnummern der beiden Experimentatoren bei Abschluss einer Testreihe auf Null stellen.

16. Subjektives Messverfahren gemäß einem der vorherigen Ansprüche, das darin besteht, bei Abschluss eines Tests die folgenden Schritte in Sequenz in einer bestimmten Anzahl von Malen zu wiederholen, welche aus Folgendem bestehen:
- Den Experimentatoren die Informationen über den folgenden Test zu kommunizieren,
- Die Verbindungen mit den Experimentatoren zu beenden,
- Die Stufen des genannten subjektiven Messverfahrens gemäß den vorherigen Ansprüchen aufeinander folgen zu lassen, in denen der laufende Test unterschiedlich von jedem bereits von dem durch die beiden Experimentatoren gebildeten Paar durchgeführten ist.

17. Subjektives Messverfahren gemäß Anspruch 16, in dem die Reihenfolge zwischen den verschiedenen Tests für ein bestimmtes Experimentatorenpaar bestimmt wird.

18. Subjektives Messverfahren gemäß einem der vorherigen Ansprüche, das darüber hinaus die Schritte umfasst, die aus Folgendem bestehen:
- Herstellung (1) einer zusätzlichen Verbindung zwischen jedem zusätzlichen Experimentator und der Plattform,
- Anfügen (2) jeder Verbindung untereinander mithilfe der Plattform zur Herstellung einer Kommunikation zwischen allen Experimentatoren und um ihnen zu erlauben, miteinander zu sprechen, wobei die Plattform bei der Kommunikation abgehängt ist, um Daten über die Kommunikation zu erwerben.

19. Subjektives Messverfahren, das im parallelen Abwickeln eines Verfahrens gemäß Anspruch 16 mit den verschiedenen Experimentatorenpaaren besteht, wobei jedes Experimentatorenpaar die Testpläne in einer für jedes Paar spezifischen bestimmten Ordnung abwickelt.

20. Plattform für subjektive Messungen mit Mitteln für die Umsetzung aller Schritte eines Verfahrens gemäß einem der vorherigen Ansprüche, **dadurch gekennzeichnet, dass** sie Folgendes umfasst:
- ein Berechnungsmittel (10), auf dem eine Verwaltungs-Software (14) der Plattform installiert ist,
- ein Zugangsmittel (11) zum Telekommunikationsnetz in Verbindung mit dem Berechnungsmittel (10) und mit:
- wenigstens einer Schnittstelle (15) zum Telekommunikationsnetz,
- einer direkten Schnittstelle (18) zu einem Verarbeitungsmittel des Signals,
- einem Softwaremodul (16) zur Verwaltung der eingehenden und ausgehenden Anrufe,
- ein Verarbeitungsmittel (12) des Signals in Verbindung mit dem Berechnungsmittel (10) mit:
- einer direkten Schnittstelle (20) zum Zugangsmittel zum Telekommunikationsnetz,
- einem Softwaremodul (21) zur Messung der sprachlichen Parameter.

21. Plattform zum Sammeln von Daten gemäß Anspruch 20, in der:
- das Berechnungsmittel (20) ein mit einem internen Bus (13) ausgestatteter PC ist,
- das Zugangsmittel (11) zum Telekommunikationsnetz eine Zugangskarte ist, die ausgerüstet ist mit:
- einer Schnittstelle (19) mit internem Bus des PCs
- wenigstens einer Schnittstelle (15) vom digitalen Typ mit dem Telekommunikationsnetz
- einer direkten Schnittstelle (18) mit einem Verarbeitungsmittel des Signals,
- einem Softwaremodul (16) zur Verwaltung der eingehenden und ausgehenden Anrufe,
- das Verarbeitungsmittel (12) des Signals ist eine mit einem Prozessor und Speichern zur Ausführung von Verarbeitungsalgorithmen des Signals ausgerüstete Karte die mittels des internen Busses mit dem PC in Verbindung steht.

## Claims

1. A subjective measurement method consisting in setting up a test plan specifying nominal experimental conditions and nominal quality levels for carrying out tests and in collecting data during said tests relating to the quality of voice calls transmitted over a telecommunications network, the method being **characterized in that** it comprises the steps consisting in:
· establishing (1) a first connection between a platform and a first experimenter and a second connection between the platform and a second experimenter;
· interconnecting (2) the first and second connections by means on the platform to establish a call between the two experimenters and enable them to converse, the platform being cut into the call in order to acquire data about the call;
· collecting (3) the experimenters' points of view concerning their perceptions of the quality level they observe during their conversation;
· the platform evaluating (4) consistency both within the data collected and between nominal experimental conditions and the nominal quality level associated with the current test; and
· determining (5) how the current test is to be carried out as a function of the test plan and of the result of the evaluation.

2. A subjective measurement method according to claim 1, in which the first connection is set up on the initiative of the first experimenter dialing a telephone number of the platform.

3. A subjective measurement method according to claim 2, in which the second connection is set up at the initiative of the platform which invites the first experimenter to dial a telephone number of the second experimenter.

4. A subjective measurement method according to any one of claims 1 to 3, further comprising the step which consists in determining the instructions for carrying out tests based on a correspondence table between various possible responses to a question asked by the platform and the keys of a telephone keypad.

5. A subjective measurement method according to any one of claims 1 to 3, further comprising the step which consists in determining instructions for carrying out tests based on a correspondence table between various possible responses to a question asked by the platform and key words to be uttered by an experimenter.

6. A subjective measurement method according to any one of claims 1 to 5, in which the platform interconnects the connections via determined external equipment that is to be evaluated.

7. A subjective measurement method according to claim 6, in which the call data coming from each of the experimenters is modified by the determined equipment.

8. A subjective measurement method according to claim 6, in which the call data coming from only one of the experimenters is modified by the determined equipment.

9. A subjective measurement method according to any one of claims 1 to 8, in which acquiring current experimental conditions includes obtaining responses from the experimenters to questions asked by the platform concerning operating conditions, voice parameter measurements, and measurements of environment parameters that are performed in non-intrusive manner by the platform.

10. A subjective measurement method according to any one of claims 1 to 9, in which the platform terminates the call by disconnecting the interconnection between the two connections.

11. A subjective measurement method according to claim 10, in which, after terminating the call, the platform maintains each of the two connections for a determined length of time in order to input responses from each of the experimenters to questions asked by the platform.

12. A subjective measurement method according to any one of claims 1 to 11, further comprising the step which consists in:
· determining a list of experimenters authorized to call the platform, giving each of them an authentication number.

13. A subjective measurement method according to claim 12, further comprising the step which consists in:
· the platform checking the authorization given to an experimenter for calling the platform by verifying the authentication number given by the experimenter following a request made by the platform.

14. A subjective measurement method according to claim 12 or claim 13, further comprising the step which consists in:
· managing a database of authentication numbers each having a validity duration associated with a given test.

15. A subjective measurement method according to claim 14, further comprising the step which consists in:
· at the end of a series of tests, zeroing the validity duration of the authentication numbers of the two experimenters.

16. A subjective measurement method according to any preceding claim, consisting, at the end of a test, in sequentially repeating the following steps for a determined number of times:
· giving the experimenters information concerning the next test;
· releasing the connections with the experimenters; and
· performing the steps of said subjective measurement method according to any preceding claim, during which steps the current test differs from each of the tests that have already been carried out by the pair constituted by the two experimenters.

17. A subjective measurement method according to claim 16, in which the order of the various tests is determined for a given pair of experimenters.

18. A subjective measurement method according to any preceding claim, further comprising the steps which consists in:
· establishing (1) an additional connection between each additional experimenter and the platform; and
· interconnecting (2) each connection with the others by means of the platform to establish a call between all of the experimenters, enabling them to converse with one another, the platform being cut in on the call in order to acquire data about the call.

19. A subjective measurement method which consists in running a method according to claim 16 in parallel with different pairs of experimenters, the order in which the tests of the plan are carried out being specific for each pair of experimenters.

20. A subjective measurement platform for implementing a method according to any preceding claim, the platform being **characterized in that** it comprises:
· computation means (10) having platform management software (14) installed thereon;
· means (11) giving access to the telecommunications network in connection with the computation means (10) and comprising:
· at least one telecommunications network interface (15); and
· a direct interface (18) with signal processor means; and
· signal processor means (12) connected with the computation means (10) and comprising:
· a direct interface (20) with the telecommunications network access means; and
· a software module (21) for measuring voice parameters.

21. A data collection platform according to claim 20, in which:
· the computation means (10) is a personal computer fitted with an internal bus;
· the means (11) giving access to the telecommunications network is an access card fitted with:
· an interface (19) to the internal bus of the personal computer;
· at least one digital type interface (15) to the telecommunications network;
· a direct interface (18) to signal processor means; and
· a software module (16) for handling incoming and outgoing calls; and
· the signal processor means (12) is a card fitted with a processor and memories for performing signal processing algorithms and connected to the computer by means of the internal bus.
